(19)

Europäisches
Patentamt
European
Patent Office
Office européen
des brevets

(11) **EP 2 441 794 A2**

(12) **EUROPEAN PATENT APPLICATION**

(43) Date of publication:
**18.04.2012 Bulletin 2012/16**

(21) Application number: **11184076.5**

(22) Date of filing: **06.10.2011**

(51) Int Cl.:
*C08J 9/00* (2006.01)   *C08J 9/04* (2006.01)
*C08J 9/12* (2006.01)   *C08L 23/16* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.10.2010 EP 10186809**

(60) Divisional application:
**12152736.0**

(71) Applicant: **Lanxess Elastomers B.V.
6167 AC Geleen (NL)**

(72) Inventor: **Meijers, Peter Wilbert Leonie Jeanette
6160 BC Geleen (NL)**

(74) Representative: **Herbold, Matthias
Lanxess Deutschland GmbH
LIP-IPR
51369 Leverkusen (DE)**

(54) **Foamable elastomeric composition**

(57)    The invention is related to an elastomer composition comprising an elastomeric polymer comprising ethylene and a-olefin derived units, a curing package and a blowing agent wherein the blowing agent comprises a compound containing water of crystallization.

The invention also relates to a process for the manufacture of a foamed article comprising the steps of preparing an elastomeric composition, shaping, foaming and curing the elastomeric composition. The invention further relates to a foamed article.

EP 2 441 794 A2

**Description**

The invention is related to a foamable elastomer composition comprising an elastomeric polymer comprising ethylene and $\alpha$-olefin derived units, a curing package and a blowing agent.

The invention also relates to a process for the manufacture of a foamed article comprising the steps of foaming and curing the elastomeric composition. The invention further relates to a foamed article.

A foamable elastomer composition containing a blowing agent is known from EP 1 964 864. The blowing agent described includes organic blowing agents such as an azo blowing agent, a N-nitroso blowing agent, a fluoroalkane blowing agent.

A disadvantage of the elastomer composition described in EP 1 964 864 is that the therein comprised organic blowing agents represent health and environmental risks during storage and handling of the blowing agent and storage and handling of the composition. A further disadvantage is that decomposition products originating from the blowing agents if generated during the foaming process represent as well a health and/or environmental hazard. This hazard is preserved throughout the lifecycle of the foamed article.

A purpose of the invention is to provide a new foamable elastomer composition comprising a blowing agent that does not have the described health and environmental drawbacks.

This objective is reached by a foamable elastomer composition wherein the blowing agent comprises a compound containing water of crystallization.

Surprisingly with the blowing agent according to the invention a foamable elastomer composition is obtained that does not have the described health and environmental drawbacks.

Furthermore are the blowing agents comprised in the elastomer composition of the present invention readily available from nature or as a by-product of chemical processes and consequently do not require dedicated chemical syntheses as is common practice for above mentioned organic blowing agents.

Summary of the invention

The invention relates to an elastomer composition comprising an elastomeric polymer comprising ethylene and $\alpha$-olefin derived units, a curing package and a blowing agent characterized in that the blowing agent comprises a compound containing water of crystallization.

Details of the invention

Preferred elastomeric polymer for use in the present invention are copolymers of ethylene and one or more $C_3$ to $C_{23}$ $\alpha$-olefins. Copolymers of ethylene and propylene are most preferred. Other $\alpha$-olefins suitable in place of propylene to form the copolymer or to be used in combination with ethylene and propylene to form a terpolymer include 1-butene, 1-pentene, 1-hexene, 1-octene and styrene, branched chain $\alpha$-olefins such as 4-methylbutene-1,5-methylpentene-1 and 6-methylheptene-1; and mixtures thereof.

More complex elastomeric polymer, often designated as interpolymers, may be prepared using a third component. The third component generally used to prepare an interpolymer substrate is a polyene monomer selected from non-conjugated dienes and trienes. The copolymerization of diene or triene monomers allows introduction of an unsaturated bond, thereby enhancing cross-linking of the interpolymer by means of a curing package.

The non-conjugated diene monomer preferably has from 5 to 14 carbon atoms. Preferably, the diene monomer is characterized by the presence of a vinyl group in its structure and can include cyclic and bicyclo compounds. Representative diene monomers include 1,4-hexadiene, 1,4-cyclohexadiene, 1,5-hexadiene, 1,6-heptadiene, 1,7-octadiene, dicyclopentadiene, 5-ethylidene-2-norbornene, 5-vinylidene-2-norbornene, 5-methylene-2-norbornene, 1,5-heptadiene, and 1,6-octadiene. The interpolymer may comprise a mixture of more than one diene monomer. Preferred non-conjugated diene monomers for preparing a terpolymer or interpolymer are 1,4-hexadiene (HD), dicyclopentadiene (DCPD), 5-ethylidene-2-norbornene (ENB) and 5-vinylidene-2-norbornene (VNB).

The triene monomer will have at least two non-conjugated double bonds, and up to about 30 carbon atoms. Typical triene monomers useful in the interpolymer of the invention are 1-isopropylidene-3,4,7,7-tetrahydroindene, 1-isopropylidenedicyclopentadiene, dihydro-isodicyclopentadiene, and 2-(2-methylene-4-methyl-3-pentenyl) [2.2.1] bicyclo-5-heptene.

Ethylene-propylene or higher $\alpha$-olefin copolymers may consist of from about 15 to 80 wt.% ethylene and from about 85 to 20 wt.% $C_3$ to $C_{23}$ $\alpha$-olefin with the preferred weight ratio being from about 35 to 75 wt.% ethylene and from about 65 to 25 wt.% of a $C_3$ to $C_{23}$ $\alpha$-olefin, with the most preferred ratio being from 45 to 70 wt.% ethylene and 55 to 30 wt.% $C_3$ to $C_{23}$ $\alpha$-olefin.

In a preferred embodiment of the present invention, the elastomeric polymer comprises from 0.01 to 20 wt.%, preferably 0.05 to 15 wt.%, or more preferably 0.1 to 10 wt.% polyene-derived units. Irrespective of the other components of the elastomer composition, a low content of polyene derived units may cause surface shrinkage on the obtained foamed elastomeric composition. Conversely, a high content of polyene derived units may produce cracks in the foamed elastomeric composition.

Also preferred elastomeric polymers for use in the present invention are silicone rubber, fluorine rubber, acrylic rubber, polyurethane rubber, polyamide rubber, natural rubber, polyisobutylene rubber, polyisoprene rubber, chloroprene rubber, butyl rubber, nitrile butyl rubber, styrene-butadiene rubber, styrene-butadiene-styrene rubber, styrene-isoprene-styrene rubber, styrene-ethylene-butadiene rubber, styrene-ethylene-butylene-styrene rubber, styrene-isoprene-propylene-styrene rubber, chlorosulfonated polyethylene rubber or mixtures thereof.

The elastomer composition can comprise a blend of more than one of the above defined elastomeric polymers.

The elastomeric polymer preferably has a Mooney viscosity, ML(1+4)125°C, in the range of, for example, 10 to 150 MU, or preferably 20 to 80 MU.

The elastomer composition according to the invention may also comprise polymers other than the above described elastomeric polymer. Such polymers other than the elastomeric polymer, include rubber and non-rubber polymers. The other rubber polymers include rubber copolymer comprising a component of a cyclic or non-cyclic polyene having non-conjugated double bonds (e.g. α-olefin-dicyclopentadiene, such as 1-butene-ethylidene norbornene, etc.), ethylene-propylene rubber, silicone rubber, fluorine rubber, acrylic rubber, polyurethane rubber, polyamide rubber, natural rubber, polyisobutylene rubber, polyisoprene rubber, chloroprene rubber, butyl rubber, nitrile butyl rubber, styrene-butadiene rubber, styrene-butadiene-styrene rubber, styrene-isoprene-styrene rubber, styrene-ethylene-butadiene rubber, styrene-ethylene-butylene-styrene rubber, styrene-isoprene-propylene-styrene rubber, and chlorosulfonated polyethylene rubber.

The non-rubber polymers include, polyethylene, polypropylene, acrylic polymer (e.g. poly(meta)acrylic acid alkyl ester, etc.), polyvinyl chloride, ethylene-vinyl acetate copolymers, polyvinyl acetate, polyamide, polyester, chlorinated polyethylene, urethane polymers, styrene polymers, silicone polymers, and epoxy resins.

These polymers other than the elastomeric polymer may be present alone or in combination of two or more kinds.

The ratio of the polymer other than the elastomeric polymer to the elastomeric polymer can be 1.0 or less, preferably 0.66 or less.

The curing package comprises one or more additives, further called curing agent or cross-linking agent, that will under the effect of heat lead to cross-linking of the elastomeric composition. The cross-linking agent used is not limited to any particular one. The curing agents that may be preferably used are sulfur, sulfur compounds (e.g. 4,4'-dithiomorpholine), organic peroxides (e.g. cumene peroxide), nitroso compounds (e.g. p-dinitrosobenzene), resins (e.g. alkyl phenol formaldehyde resin, melamine-formaldehyde condensate, etc.) and polyhydrosilanes. The cross-linking agents might be combined with activating compounds and may be used singly or in combination of two or more kinds.

In a preferred embodiment of the present invention, the elastomer composition comprises a curing package comprising a cross-linking agent selected from the group consisting of peroxide, sulfur and resins in particular organic peroxide and sulfur. Preferably the elastomer composition of the present invention does not contain azido containing compounds.

In the elastomeric composition of the present invention, one preference is that the curing package comprises an organic peroxide cross-linking agent. The organic peroxide cross-linking agent is an organic compound having a peroxide structure. Preferably an organic peroxide cross-linking agent having a 1-minute half-life temperature over 160°C, more preferably an organic peroxide cross-linking agent having a 1-minute half-life temperature of 200°C or less, or even more preferably an organic peroxide cross-linking agent having a 1-minute half-life temperature in the range of 170°C to 190°C is used. Specifically, the organic peroxide cross-linking agents that may be used include dicumyl peroxide (1-minute half-life temperature: 175°C), dimethyl di(t-butylperoxy)hexane (1-minute half-life temperature: 180°C), and bis(t-butylperoxy isopropyl)benzene (1-minute half-life temperature: 175°C). Preferably, dicumyl peroxide is used. These organic peroxide cross-linking agents may be used alone or in combination of two or more kinds.

When the elastomeric polymer is cross-linked with an organic peroxide cross-linking agent under the presence of oxygen, the surface of the foamed material thus obtained might be insufficiently cross-linked or oxidized, so that the surface thereof may become tacky. The person skilled in the art will recognize that such tackiness can be avoided by performing the curing/foaming process under oxygen-free conditions or by applying commercially available additive systems to the elastomeric composition or upon curing/foaming.

The preferred amount of the organic peroxide cross-linking agent is in the range of 0.05 to 20 per hundred parts of rubber (phr), and preferably in the range of 2 to 8 phr.

The curing package comprising peroxide as a cross-linking agent may further comprise at least one coagent. Coagents that may be used are tri allyl cyanurate (TAC), tri allyl isocyanate (TAIC), trimethyl propane trimethacrylate (TRIM), 1,2-vinyl polybutadiene, m-phenylene-bis-maleimide (HVA-2) and zinc dimethacrylate (ZDMA).

In a preferred embodiment, the curing package comprising peroxide as a cross-linking agent comprises 0.05 to 20 phr of coagent.

As a second preference, the curing package contains sulfur as a cross-linking agent to enhance final properties of the foamed article, such as, for example, durability, resulting from sulfur cured elastomeric composition. Curing efficiencies vary depending on the type of the curing additives used, so an amount of cross-linking agent may be properly selected. For example, when sulfur is used as the cross-linking agent, the preferred amount of sulfur is in the range of 0.1 to 10 phr, or preferably 0.5 to 3 phr.

The curing package may further comprise additives like cross-linking accelerators such as thiazoles, e.g. dibenzothiazyl disulfide, 2-mercaptobenzothiazole; thioureas, e.g. diethyl thiourea, trimethyl thiourea, dibutyl thiourea; dithiocarbamic acids, e.g. sodium dimethyldithiocarbamate, sodium diethyldithiocarbamate, zinc dimethyldithiocarbamate, zinc diethyldithiocarbamate; guanidines, e.g. diphenylguanidine, di-o-tolylguanidine; sulfenamides, e.g. benzothiazyl-2-diethylsulfenamide, N-cyclohexyl-2-benzothiazyl sulfonamide; thiurams, e.g. tetramethylthiurammonosulfide, tetramethylthiuramdisulfide; xanthogenic acids, e.g. sodium isopropylxanthogenate, zinc isopropylxanthogenate; aldehyde ammonias, e.g. acetaldehyde ammonia, hexamethylenetetramine; and aldehyde amines, e.g. n-butyraldehydeaniline, butyraldehyde monobutylamine. Preferably, thiazoles and thioureas are used.

These cross-linking accelerators may be used alone or preferably in combination of two or more kinds. Preferably, thiazoles and thioureas are used in combination. The combination use of these aids can ensure a good foam shape and flexibility of the obtained foamed elastomeric composition.

The preferred amount of cross-linking accelerator is in the range of 0.01 to 20 phr, preferably 0.02 to 10 phr, or more preferably 0.5 to 4 phr. Specifically, in the case of using thiazoles, the amount of the thiazoles is in the range of, for example, 0.01 to 5 phr, or preferably 0.5 to 3 phr. In the case of using thioureas, the amount of the thioureas is in the range of 0.01 to 5 phr, or preferably 0.1 to 1 phr.

Further, in the case of using thiazoles and thioureas in combination, the weight ratio of the thioureas to the thiazoles (thioureas/thiazoles) is in the range of, for example, 0.1 to 10, or preferably 0.2 to 1.

According to the present invention, the blowing agent comprises a compound containing water of crystallization. Water of crystallization or water of hydration is water occurring in crystals, where it is necessary for the maintenance of crystalline properties, but capable of being removed by sufficient heat. It is mostly present in a definite, stoichiometric ratio. Preferably a compound containing water of crystallization refers to a metal complex containing water that is not directly bonded to the metal ion. Such water containing compound may only release its water of crystallization, in substantial amounts, at a temperature at or above the typical mixing temperature of the elastomeric composition. The water release temperature may on the other hand be not so high, that such temperature is detrimental for the integrity of the elastomeric composition to be foamed. The appropriate compound can therefore be selected upon choosing the elastomeric composition to be foamed (and therefore knowing the range of the temperature in which the elastomeric composition can be processed). Analytical instruments like DTA (differential thermal analysis), DSC (differential scanning calorimetry) and TG (thermogravimetry) can be used to determine the suitability of a potential compound for the intended purpose. The preferred temperature for the release of water of crystallization is above 110°C to release the water with sufficient vapor pressure to allow expansion of the elastomeric composition. A preferred maximum temperature for the release of water of crystallization is 280°C, a temperature at which the degradation of elastomeric polymer becomes noticeable.

Preferably the compound containing water of crystallization is a metal salt hydrate. More preferably the metal salt hydrate contains a group 1 or group 2 metal. Most preferred the metal salt hydrate contains a metal selected from the group consisting of Na, Mg, K and Ca.

Compound containing water of crystallization according to the invention may have water of crystallization which is released at different temperatures. This difference originates in the position where the water is incorporated in the crystal structure. A typical example is calcium sulfate dihydrate ($CaSO_4 \cdot 2H_2O$) which in total contains 2 molecules $H_2O$ per $CaSO_4$ unit, of which 75% are released at a lower temperature than the last 25%.

A further characteristic of the use of a compound containing water of crystallization is that the release of the water of crystallization is an endothermic process. In contrast to the exothermic decomposition of the majority of chemical blowing agents, compounds containing water of crystallization are intrinsically safe to handle since they are not subjected to a self accelerated decomposition mechanism.

The endothermic release of water of crystallization further results in an improved response of the foamable elastomeric composition during the foaming process. An initiated chemical blowing process is self supported by the exothermic process and will proceed vigorously. In contrast the foaming process with the compound according to the present invention will readily respond to external temperature adjustments.

The use of a blowing agent comprising water of crystallization is particularly beneficial to a thermoset elastomeric composition. Thermoset elastomeric compositions, in contrast to thermoplast elastomeric compositions, are characterized by a temperature induced curing process that cross-links and "sets" the polymeric phase at elevated temperature. Such curing process can start before, during and/or after the blowing process. Since both the curing and foaming processes occur over a broad temperature range, an overlap will be present resulting in mostly simultaneous foaming and curing process. The person skilled in the art will advantageously use these ranges to optimize the foaming process in view of foam density, appearance, compression set, tensile strength, etc. Under the elevated temperature of the curing process, the released water of crystallization has a high vapor pressure providing a good foaming efficiency. Cooling of the foamed elastomeric composition only takes place at a high state of cure. Upon cooling, the water of crystallization will condense and substantially reduce the pressure in the formed cells. Since the polymeric phase has been cured under expanded conditions, potential deformation will be compensated by diffusion of ambient gasses into the foamed elastomeric composition.

In a preferred embodiment of the invention the compound containing water of crystallization is selected from the group consisting of hydrates of sodium sulfate, calcium sulfate, magnesium sulfate, copper sulfate, sodium hydrogen sulfate, calcium chloride, sodium acetate, potassium sodium tartrate, aluminum chloride, iron sulfate, zinc sulfate, sodium carbonate, sodium phosphate, tin(II) chloride and citric acid or its salts.

Preferred are compounds containing water of crystallization with a high weight ratio of water of crystallization to compound. Such compounds will be characterized by a high number of water molecules per elementary unit (e.g. $Na_2SO_4 \cdot 10H_2O$, $Na_3PO_4 \cdot 12H_2O$, etc.) and/or by a low molecular weight of the anhydrous part of the compound ($CH_3CO_2Na \cdot 3H_2O$).

Less preferred are compounds containing water of crystallization of which the anhydrous forms exhibit hygroscopic behavior (e.g. $CaCl_2$, $SnCl_2$, etc.) unless a hygroscopic behavior of the foamed elastomeric composition has no detrimental effects on the application.

The most preferred compound containing water of crystallization will be subject to a judicious selection of properties based on, amongst others, the above mentioned characteristics. The person skilled in the art will have to consider the decomposition temperature(s), the amount of water released, the morphology of the compound containing water of crystallization, the compatibility with the other composition ingredients, the compatibility with the application of the foamed article, costs and availability of the compound containing water of crystallization, etc. The applicant identified $CaSO_4 \cdot 2H_2O$, commonly named gypsum, as a compound containing water of crystallization as being a suitable blowing agent for the here included examples. By no means should this choice limit the scope of the invention. The person skilled in the art will recognize that many other compounds containing water of crystallization might result in similar or improved properties for the present and or other elastomeric compositions.

The preferred amount of the blowing agent comprising a compound containing water of crystallization is in the range of 0.1 to 40 phr, preferably 0.5 to 20 phr, or more preferably 1 to 10 phr. Specifically, in the case of using calcium sulfate, the mixing ratio of the calcium sulfate is in the range of, for example, 0.2 to 10 phr, or preferably 0.5 to 5 phr.

Metal salts which contain water of crystallization are known from GB-A-1080619 as blowing agents of certain thermoplastics, in particular for azido cross linked polypropylene.

In a preferred embodiment of the invention the elastomer composition comprises at least one compound selected from the group consisting of processing aid, filler, softening agent and stabilizer or a combination thereof.

The processing aids that may be used include, for example, zinc oxide, and stearic acid and its derivatives. These processing aids may be used alone or in combination of two or more kinds. The amount of the processing aid is in the range of, for example, 0.1 to 20 phr, or preferably 1 to 10 phr.

The fillers that may be used include, for example, inorganic fillers, such as carbon black, calcium carbonate, magnesium carbonate, calcium hydroxide, magnesium hydroxide, aluminium hydroxide, silicic acid and salts thereof, clay, talc, mica powder, bentonite, silica, alumina, aluminium silicate, acetylene black, and aluminium powder; organic fillers, such as cork, cellulose and other known fillers. These fillers may be used alone or in combination of two or more kinds. The amount of the filler is in the range of 10 to 300 phr, preferably 50 to 200 phr, or more preferably 100 to 200 phr.

The softening agents that may be used include petroleum oils e.g. paraffin-based process oil such as paraffin oil, etc., naphthene-based process oil, drying oils or animal and vegetable oils e.g. linseed oil, etc., aromatic process oil, etc., asphalt, low molecular weight polymers, organic acid esters, e.g. phthalicester e.g. di-2-octyl phthalate (DOP), dibutyl phthalate (DBP) phosphate, higher fatty acid ester, alkyl sulfonate ester, etc., and thickeners. Preferably petroleum oils or more preferably paraffin-based process oil is used. These softening agents may be used alone or in combination of two or more kinds. The amount of the softening agent is in the range of 10 to 100 phr, or preferably 20 to 50 phr.

The stabilizers that may be used include fire retardant, antiaging agent, heat stabilizer, antioxidant and antiozonant. These stabilizers may be used alone or in combination of two or more kinds. The amount of the stabilizer is in the range of 0.5 to 20 phr, or preferably 2 to 5 phr.

Further, depending on the purpose and application, the elastomeric composition can contain additives, such as tackifiers, desiccants, adhesives and coloring agents within the range of not affecting the excellent effect of the foamed material to be obtained.

One embodiment of the invention relates to the elastomer composition comprising at least one further blowing agent.

The further blowing agents that may be used include organic blowing agents and inorganic blowing agents.

The organic blowing agents that may be used include, azo blowing agents, such as azodicarbonamide (ADC), barium azodicarboxylate, azobisisobutyronitrile (AIBN), azocyclohexylnitrile, and azodiaminobenzene; N-nitroso foaming agents, such as N,N'-dinitrosopentamethylenetetramine (DTP), N,N'-dimethyl-N,N'-dinitroso terephthalamide, and trinitrosotrimethyltriamine; hydrazide foaming agents, such as 4,4'-oxybis(benzenesulphonyl hydrazide) (OBSH), paratoluene sulfonylhydrazide, diphenyl sulfone-3,3'-disulfanylhydrazide, 2,4-toluene disulfonylhydrazide (TSH), p,p-bis(benzenesulfonyl hydrazide) ether, benzene-1,3-disulfonylhydrazide, and allylbis(sulfonylhydrazide);semicarbazide foaming agents, such as p-toluylenesulfonyl semicarbazide and 4,4'-oxybis(benzenesulfonyl semicarbazide); fluoroalkane foaming agents, such as trichloromonofluoromethane and dichloromonofluoromethane; triazole foaming agents, such as 5-morphoyl-1,2,3,4-thiatriazole; and other known organic foaming agents. The organic foaming agents also include thermally expansible microparticles containing microcapsules in which thermally expansive material is encapsulated. However, preferably the composition of the present invention does not contain any organic blowing agents.

The inorganic foaming agents include, for example, hydrogencarbonate, such as sodium hydrogencarbonate and ammonium hydrogencarbonate; carbonate, such as sodium carbonate and ammonium carbonate; nitrite, such as sodium nitrite and ammonium nitrite; boron hydride salts, such as sodium borohydride; azides; and other known inorganic foaming agents.

These additional foaming agents may be present alone or in combination of two or more kinds or may not be present.

The amount of the additional blowing agent is in the range of 0 to 20 phr.

An advantage of a further blowing agent will be the increased flexibility in composition design to fulfill production process and physical property requirements of the foamed article. One embodiment of the invention relates to a process for the manufacture of a foamed article comprising the steps of preparing, shaping, foaming and curing an elastomeric composition.

The elastomeric composition comprising the compound containing water of crystallization, can be prepared in the form of admixture by properly mixing above-mentioned component and kneading the mixture. In a preferred embodiment, the mixing process is performed on a kneader, in an extruder or on a mill.

During kneading, the mixture may also be properly heated. Preferably, mixing is be performed by first kneading components other than additive components to be added in small amounts, such as, for example, cross-linking agents, foaming agents, cross-linking accelerators, and foaming accelerator, and then adding these additive components to the kneaded mixture. Whereas the addition of the additive components can be done on the same mixing equipment, the cooling of the pre-mix and addition of additive components is easily performed on a second mixing device such as a 2-roll mill. Such use of a second mixing device is advantageous considering that the additive components are often heat sensitive and can thus be mixed to the composition at a lower temperature.

The elastomeric composition prepared according to the invention can be recovered from the mixing process in bulk or shaped in form of sheets, slaps or pellets. The shaping of the elastomeric composition can take place after mixing, as an individual shaping step, ahead the curing/foaming process or during the curing/foaming process.

Shaping of the elastomeric composition can also take place at a later stage, e.g. on the foamed and cured article.

In a preferred embodiment, the shaping of the elastomer composition is performed by extrusion, calendaring, compression molding or injection molding.

The elastomeric composition thus prepared is heated to a temperature at which the curing and/or foaming process takes place, so that a foamed and cross-linked elastomeric composition is obtained. Depending on the curing package and the foaming agent used, the curing process can take place before, simultaneously and/or after the foaming process. Since both the curing and foaming processes occur over their own specific temperature ranges, an overlap of the temperature ranges might be present resulting preferably in simultaneous foaming and curing process.

Optionally, the application of a temperature gradient across the foaming and curing process allows the skilled person to influence final properties of the foamed article.

The temperature for foaming and curing is properly selected, for example, depending on the cross-linking starting temperature of the cross-linking agent, or the foaming temperature of the foaming agent. For example, the heating temperature is 350°C or less, preferably 150 to 250°C.

In a preferred embodiment the foaming and curing of the elastomer composition is performed by steam, infra red heating, microwave, hot air, salt bath, fluidized bed or any combination thereof.

Most preferably at least part of the foaming and curing of the elastomer composition is performed at a temperature between 120 and 250°C.

The curing and foaming processes can be performed in any equipment that is known and suitable for curing and/or foaming of an elastomeric composition. This can be done either in a static process, as well as in a dynamic process. In the first case, mentioning can be made to foaming and curing in a predetermined shape, or thermoforming, by the use of a heated shape.

Preferably, the dynamic process comprises a shaping section (e.g. and extruder) that continuously feeds the shaped elastomeric composition to a curing and foaming section (e.g. hot air tunnel). When an extruder is used for the shaping of the elastomeric composition, the temperature should be carefully controlled in order to prevent premature release and volatilization of the water before exiting the extruder die. The mixture is then heated to conditions where water is released from the compound containing water of crystallization and the elastomeric composition expands to a foamed article. Further suitable curing and foaming equipment can also be a salt bath, a micro wave oven, an infrared oven, a steam oven or any combination thereof.

The method for curing and foaming the elastomeric composition is not particularly limited to above process. Alternatively the composition can be shaped into a sheet using a calender, or the like, and then be foamed and cured in a steam autoclave. Alternatively, the elastomeric composition can be formed into a complex shape, such as an uneven shape, by injection molding, press forming, or other forming method, and then be foamed and cured.

A foaming ratio determined as the density ratio before and after foaming of the foamed elastomeric composition thus obtained is, for example, 1.1 or more, or preferably 2 or more, and usually 30 or less.

The use of the compound containing water of crystallization in the process for preparing a foamed article according to the invention enables the skilled person to perform a controlled foaming process.

The amount of water released from the compound containing water of crystallization is a function of the temperature, pressure and the residence time in the foaming process. For that reason the foam density can be easily controlled; the same composition can be used to make polymer foams of different densities. As care is taken to prepare a good dispersion of the compound containing water of crystallization in the elastomeric composition, the compound containing water of crystallization does not only act as a source of the blowing agent, but can also acts as a nucleating agent which gives very fine and uniform cell structure.

To achieve the good dispersion of the compound containing water of crystallization, the compound containing water of crystallization, when in solid form added to the mixture, preferably is in the form of fine, small, dispersable particles. Generally the particle size is in the range of 0.01-100 $\mu$m and more preferably the compound containing water of crystallization has a particle size below 50 $\mu$m. This results in a large number of well dispersed nucleating sites within the elastomeric composition.

Optionally, the compound containing water of crystallization can be added to the mixture as a dispersion or solution in a carrier. Such carrier can be solid or liquid. Solid carriers can be polymers or fillers. Liquid carriers are understood to be all carriers that have a boiling point at ambient pressure above room temperature and a melting point below the mixing temperature of the rubber composition. Optionally the liquid carrier might fully or partly evaporate under mixing or curing conditions resulting in a finely dispersed compound containing water of crystallization. Typical carriers are mineral oil, waxes, hydrocarbon solvents, alcohols, ethers and others.

The amount of compound containing water of crystallization used in the process according to the invention depends on the density of the foamed elastomeric composition to be prepared, but of course also on the amount of water which can and is released per unit weight of compound containing water of crystallization. The more water is released per unit weight of compound containing water of crystallization, the less compound containing water of crystallization is needed for a given foam density. On the other hand, the compound containing water of crystallization may only release part of its water of crystallization.

The foaming and curing process of the present invention can also be used for co-extrusion of foam parts with solid parts, or for coating of foamed profiles with a solid polymer skin, which improved tear strength and low coefficient of friction.

The foam structure can be either uniform (i.e. bulk foaming) or also selective by applying a foam gradient, or a foamed region (constrained by pressure or foamed locally by focused energy).

The invention also relates to a foamed article, prepared by the process according to the present invention. A foamed article is characterized that it has a density lower than the density of the elastomeric compound before curing and foaming. The foam density can be controlled, e.g. target densities attained, by judicious selection of compound containing water of crystallization, water-release temperature of the compound, curing package, foaming and curing temperature and the residence time in the foaming and curing equipment.

In a preferred embodiment of the invention, such a foamed article has a bulk density between 50 and 1100 kg/m$^3$.

In a more preferred embodiment, the foamed article has a bulk density between 500 and 1000 kg/m$^3$.

The density, which depends on the degree of foaming of the elastomeric composition, may vary from very low densities of about 50 kg/m$^3$, to densities approaching the density of the solid, so unfoamed, elastomeric composition.

In the low density area the foamed elastomeric composition is used for example as insulation material. A good example for a foamed article is an insulation hoses to cover hot water transport pipes of a central heating system or an insulation hose to cover the transport hose of an automotive coolant system.

A typical example in the high-density area is so-called micro-porous weather profiles. Such profiles are for example used in automobiles and buildings, to seal windows and doors. The elastomeric composition is slightly foamed, so that the profile is reduced in weight, but still shows good mechanical properties. Weight reduction is especially favorable for automobiles as there is a continuous need to decrease the weight of automobiles. Further the articles of such a slightly foamed composition comprise less of the elastomeric polymer, so that a cost reduction is obtained.

Foamed articles, which show smooth surfaces, are obtained in the high-density area.

A further advantage is that foamed article according to the invention shows good mechanical properties, especially good ultimate properties, for example tear strength, and elongation at break. Further the elastomeric composition shows a good processability, and favorable values for the compressions set. For the slightly foamed composition the mechanical properties are almost at the level of the original, unfoamed elastomeric composition. This is important for the used of the elastomeric composition in for instance extruded profiles for the building & construction market and the automotive market.

In the low-density area an insulation material is obtained having a homogeneous structure of cells of a small diameter.

EXPERIMENTAL

Small scale compositions

The compositions of Examples 1 to 7 were prepared using an internal mixer with a 3 liter capacity (Shaw K1 Mark IV Intermix) having intermeshing rotor blades and with a starting temperature of 25°C. The elastomeric polymer was first introduced to the mixer and allowed to crumble for a period of 30 seconds before carbon black, white filler and/or oil were added. Mixing was allowed to proceed until a mix temperature of 70°C was achieved, when the remaining ingredients were added. Mixing was allowed to proceed until a mix temperature of 95°C was achieved, when the batches were transferred to a two roll mill for cooling, and blending to achieve a high level of ingredient dispersion. $CaSO_4 \cdot 2H_2O$ was added on a two roll mill (Troester WNU 2). Compositions were compression molded in 2 mm sheets (10 min. 180°C) and 6 mm sheets (12 min. 180°C) for testing purposes.

The test pieces were used to determine physical properties reported in the table 2.

If not mentioned otherwise, the standard procedures and test conditions were used for Hardness (ISO 7619-1: 2004), Tensile strength (ISO 37:2005 via dumb-bell type 2), Hot air aging (ISO 188:2007), Compression set (ISO 815-1: 2008) and Mooney (ISO 289-1:2005).

The cure characteristics are expressed in ML, MH, $\Delta S$ (= MH - ML), ts2 and t'c(90), according to ISO 6502:1999.

Table 1

|  | Example 1 | Example 2 | Example 3 | Example 4 | Example 5 | Example 6 | Example 7 |
|---|---|---|---|---|---|---|---|
| EPDM KELTAN 4903[1] | 100 | 100 | 100 | 100 | 100 | 100 | 100 |
| Carbon black N-550 | 75 | 75 | 75 | 75 | 75 | 75 | 75 |
| Talc | 10 | 10 | 10 | 10 | 10 | 10 | 10 |
| Flexon 876[2] | 75 | 75 | 75 | 75 | 75 | 75 | 75 |
| Whiting[3] | 40 | 40 | 40 | 40 | 40 | 40 | 40 |
| CaO-80 | 2 | 2 | 2 | 2 | 2 | 2 | 2 |
| ZnO | 7 | 7 | 7 | 7 | 7 | 7 | 7 |
| Stearic acid | 1 | 1 | 1 | 1 | 1 | 1 | 1 |
| Processing aids[5] | 5 | 5 | 5 | 5 | 5 | 5 | 5 |
| Curing additives | 6.44 | 6.44 | 6.44 | 6.44 | 6.44 | 6.44 | 6.44 |
| S-80[7] | 1.88 | 1.88 | 1.88 | 1.88 | 1.88 | 1.88 | 1.88 |
| CaSO4.2H2O | - | 1 | 2.5 | 5 | 10 | 20 | 30 |
| *Total phr* | *323.3* | *324.3* | *325.8* | *328.3* | *333.3* | *343.3* | *353.3* |

Ingredients used: 1) EPDM based on 48% ethylene and 9% ENB; 2) paraffinic oil; 3) $CaCO_3$; 5) polyethylene wax; 7) curing agent: sulfur

Table 2

|  |  | Example 1 | Example 2 | Example 3 | Example 4 | Example 5 | Example 6 | Example 7 |
|---|---|---|---|---|---|---|---|---|
| Mooney 100°C | MU | 34.9 | 29.8 | 31.8 | 31.5 | 32.4 | 33.3 | 34.8 |
| $\Delta S$ 180°C | dNm | 12.0 | 10.6 | 10.1 | 9.7 | 9.5 | 9.4 | 9.4 |
| ts2 180°C | min | 0.49 | 0.49 | 0.49 | 0.49 | 0.48 | 0.49 | 0.49 |
| t'c(90) 180°C | min | 2.7 | 3.3 | 4.0 | 3.5 | 3.0 | 2.6 | 2.7 |

(continued)

| | | Example 1 | Example 2 | Example 3 | Example 4 | Example 5 | Example 6 | Example 7 |
|---|---|---|---|---|---|---|---|---|
| Tensile Strength | MPa | 10.0 | 9.5 | 8.5 | 9.3 | 8.8 | 8.8 | 7.6 |
| M100 | MPa | 2.4 | 2.2 | 2.2 | 2.1 | 2.1 | 2.0 | 2.0 |
| M300 | MPa | 7.6 | 7.2 | 7.0 | 6.9 | 6.7 | 6.4 | 6.1 |
| Elong. at Break | % | 364 | 392 | 348 | 382 | 373 | 382 | 356 |
| Hardness | Sh A | 58.0 | 57.5 | 57.4 | 57.5 | 57.9 | 58.2 | 58.8 |
| Compr. Set 72h 23°C | % | 7 | 7 | 8 | 7 | 8 | 8 | 8 |
| Compr. Set 24h 100°C | % | 32 | 33 | 34 | 34 | 37 | 39 | 40 |

Large scale compositions

The compositions of Example 8 and Comparative Experiment were prepared using an internal mixer with a 70 liter capacity (Farrel Bridge 3D Banbury), having tangential rotor blades and with a starting temperature of 25°C. The elastomeric polymer was first introduced to the mixer and allowed to crumble for a period of 30 seconds before the carbon black, white filler and oil were added. Mixing was allowed to proceed until a mix temperature of 70°C was achieved, when the remaining ingredients were added. Mixing was allowed to proceed until a mix temperature of 95°C was achieved, when the batches were transferred to a two roll mill for cooling, and blending to achieve a good level of ingredient dispersion.

Mooney measurement was carried out using an Alpha Technologies MV2000E.

Table 3

| | Example 8 | Comp. Exp. A |
|---|---|---|
| EPDM KELTAN 4903 | 100 | 100 |
| Carbon black N-550 | 75 | 75 |
| Talc | 10 | 10 |
| Flexon 876 | 75 | 75 |
| Whiting | 40 | 40 |
| CaO-80 | 2.5 | 2.5 |
| ZnO | 7 | 7 |
| Stearic acid | 1 | 1 |
| Processing aids | 5 | 5 |
| Curing additives | 6.64 | 6.64 |
| S-80 | 1.88 | 1.88 |
| CaSO4.2H2O | 5 | |
| ADC Luvomaxx AZ-75[8] | - | 1.5 |
| OBSH Luvomaxx OB-75[9] | - | 2.66 |
| *Total phr* | *329.02* | *328.18* |
| 8) Azo polymere bound 75% on EPM carrier; 9) OBSH polymere bound 75% on EPM carrier; | | |

Extrusion, blowing and curing

The compositions of Example 8 and Comparative Experiment A were fed to a 90 mm extruder with a barrel temperature profile of 50-60-70-80-90-100°C, equipped with a die and then passed through a UHF line (Berstorff, 200°C 15 m/min.) and a Hot Air tunnel (Gerlach, length 9 m, 210°C with 3 passes). Test pieces for Mooney and MDR were prepared by curing at 180°C using a curing time equivalent to twice t90 as determined by MDR rheology testing.

The methods detailed below have been used for the more specific evaluation of the sponge characteristics.

a) Sponge Density

The sponge density was measured in terms of $kg/m^3$ using the following method

1) The sponge sample was weighed and the weight recorded;
2) The sample was completely immersed in a graduated cylinder of water and the increase in volume (volume of water displaced by the sponge sample) was recorded;
3) The sponge density was then calculated from the following relationship: Sponge Density $[kg/m^3]$ = weight / volume [mg/ml]

b) Foaming ratio

The sponge density $\delta_s$ and the unfoamed composition density $\delta_0$ are measured according to the procedure under a). The foaming ratio is calculated from the following relationship:

$$\text{Foaming ratio} = \delta_s / \delta_0$$

c) Sponge compression deflection

Sponge compression deflection measures the ability of rubber compositions to retain elastic properties after subjecting a sample to a defined deflection for a specified time and temperature. The sponge compression set was measured utilizing the following procedure with a compression device that consists of 2 parallel plates between which the samples are compressed. The deflection is obtained by lowering the upper plate to the height of the spacers. The sponge profile was inserted, height wise, between the metal plates of the holder. Spacers were placed to achieve the defined compression deflection. The bolts of the holder were tightened so that the plates rest firmly on the spacers. The compressive device containing the samples was placed in an oven and maintained at 70°C for 22 hours. After the 22 hour heating period, the compressive device was removed from the oven and the samples were immediately removed from the compressive device. The samples were cooled for 30 minutes and then their height was measured to the nearest 0.025 mm. The compression set is calculated as

$$\text{Sponge Compression Set} = (T_0 - T_1) / (T_0 - T_d) \times 100$$

where

$T_0$ = original sponge height
$T_1$ = final sponge height
$T_d$ = Thickness of all spacers used

Table 4

| Properties | Units | Example 8 | Comp. A |
|---|---|---|---|
| Compound Mooney | MU | 38.0 | 38.2 |
| Compression deflection F / 20 % defl. | N | 18.5 | 17.3 |
| Water absorption | % | 0 | 0 |
| Sponge Density | $[kg/m^3]$ | 830 | 470 |
| Compound density | $[kg/m^3]$ | 1180 | 1180 |

**Claims**

1. An elastomer composition comprising an elastomeric polymer comprising ethylene and $\alpha$-olefin derived units, a curing package and a blowing agent **characterized in that** the blowing agent comprises a compound containing water of crystallization.

**2.** The elastomer composition according to claim 1 **characterized in that** the compound containing water of crystallization is selected from the group consisting of hydrates of sodium sulfate, calcium sulfate, magnesium sulfate, copper sulfate, sodium hydrogen sulfate, calcium chloride, sodium acetate, potassium sodium tartrate, aluminum chloride, iron sulfate, zinc sulfate, sodium carbonate, sodium phosphate, tin(II) chloride and citric acid or its salts.

**3.** The elastomer composition according to claim 1 or 2 **characterized in that** the elastomeric polymer comprises ethylene and propylene derived units.

**4.** The elastomer composition according to any of the claims 1 to 3 **characterized in that** the elastomeric polymer comprises from 0.1 to 10 wt.% diene-derived units.

**5.** The elastomer composition according to any of the claims 1 to 4 **characterized in that** the elastomer composition comprises at least one compound selected from the group consisting of processing aid, filler, softening agent and stabilizer or a combination thereof.

**6.** The elastomer composition according to claim 1 or 2 **characterized in that** the elastomeric polymer comprises silicone rubber, fluorine rubber, acrylic rubber, polyurethane rubber, polyamide rubber, natural rubber, polyisobutylene rubber, polyisoprene rubber, chloroprene rubber, butyl rubber, nitrile butyl rubber, styrene-butadiene rubber, styrene-butadiene-styrene rubber, styrene-isoprene-styrene rubber, styrene-ethylene-butadiene rubber, styrene-ethylene-butylene-styrene rubber, styrene-isoprene-propylene-styrene rubber, chlorosulfonated polyethylene rubber or mixtures thereof.

**7.** The elastomer composition according to any of the claims 1 to 6 **characterized in that** the curing package comprises a cross-linking agent selected from the group consisting of peroxide, resins and sulfur.

**8.** Process for the manufacture of a foamed article comprising the steps of foaming and curing the elastomeric composition according to any of the claims 1-7,.

**9.** Process according to claim 8 **characterized in that** the elastomer composition is prepared in a kneader, an extruder or a mill.

**10.** Process according to any of the claims 8 and 9 **characterized in that** the elastomer composition is shaped by extrusion, calendaring, compression molding or injection molding.

**11.** Process according to any of the claims 8 to 10 **characterized in that** the foaming and curing of the elastomer composition is performed by steam, infra red heating, microwave, hot air, salt bath, fluidized bed or any combination thereof.

**12.** Process according to any of the claims 8 to 11 **characterized in that** at least part of the foaming and curing of the elastomer composition is performed at a temperature between 120 and 250°C

**13.** A foamed article obtained by the process according to any of the claims 8 to 12.

**14.** The foamed article of claim 13 **characterized in that** it has a bulk density between 50 and 1100 kg/m$^3$.

**15.** The foamed article of claim 13 and 14 **characterized in that** it has a bulk density between 500 and 1000 kg/m$^3$.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1964864 A
- GB 1080619 A